# EUROPEAN PATENT APPLICATION

(11) **EP 2 541 378 A1**
(43) Date of publication of application: **02.01.2013**
(21) Application number: 11765423.6
(22) Date of filing: 24.03.2011
(51) Int. Cl.: G06F 3/041, G06F 3/042, G09G 3/20, G09G 3/36

(54) **DISPLAY DEVICE WITH TOUCH SENSOR**

(30) Priority: 01.04.2010 JP 2010085487
(71) Applicant: Sharp Kabushiki Kaisha, Osaka-shi, Osaka 545-8522 (JP)
(72) Inventor: NISHIMURA Tomohiko, Osaka-shi, Osaka 545-8522 (JP); MIYAZAWA Jin, Osaka-shi, Osaka 545-8522 (JP)
(74) Representative: Goddar, Heinz J.
(86) International application number: PCT/JP2011/057220
(87) International publication number: WO 2011/125522

(57) **Abstract**

Provided is a touch-sensor-equipped display device that is capable of avoiding influences of noises resulting from polarity inversion of a common voltage of the display device, without using a special circuit. It is a touch-sensor-equipped display device that includes: a sensor output readout circuit (21) that is connected to a plurality of sensor electrodes of a touch sensor part (7) successively and that outputs a signal voltage corresponding to electric characteristics of the connected sensor electrode; a sensor control circuit (23) that supplies a control signal to the sensor output readout circuit (21); and a coordinate calculation circuit (22) that detects a contact position, based on the signal voltage. The sensor control circuit (23) performs a scanning operation for obtaining full-screen sensor data in such a manner that the scanning operation is divided into a plurality of parts. The coordinate calculation circuit (22) includes: a sensor output synthesis circuit (221) that synthesizes the sensor data obtained by the plurality of divided parts of the scanning operation so as to generate full"screen sensor data; and a coordinate position detection circuit (222) that detects the position of the contact by the touching object, based on full-screen sensor data.

## Description

### Technical Field

The present invention relates to a display device equipped with a touch sensor capable of detecting a position of a contact by a finger or the like.

### Background Art

Conventionally, display devices each of which is provided with a touch sensor (referred to as "a touch panel" as well) on a front face of the display (on the observer's side) have been used in various fields. The touch sensor is an input device that enables an operation instruction, data input, etc. by detecting positions of contacts by a finger, a pen, etc. Regarding the position detection method, the following have been known: electrostatic capacitance coupling type; resistive film type; infrared type; ultrasonic type; and electromagnetic induction/coupling type.

Regarding the case where a touch sensor and a display device are used in an integrated state, there has arisen a problem that the touch sensor is affected by noises from the display device, and the position detection accuracy of the touch sensor is impaired. For example, in the case where a liquid crystal panel is used as the display device, an induction voltage is generated in a position detection conductive film of the touch sensor, resulting from a common voltage applied to a counter electrode of the liquid crystal panel. This induction voltage is a cause for noises.

A configuration for removing such noises is disclosed in, for example, JP2006-146895A. The touch-sensor-equipped display device disclosed in this patent document includes a strobe signal generation circuit, and a noise cut current signal generation circuit. The strobe signal generation circuit generates a strobe signal synchronized with a cycle of polarity inversion of the common voltage supplied to the counter electrode. The noise cut current signal generation circuit generates a noise cut current signal obtained by removing a predetermined portion from electric current that flows from a terminal connected to a touch sensor part, according to the strobe signal.

According to this conventional configuration, noises generated in an output current from a conductive film for position detection, which result from periodic polarity inversion of the common voltage, are removed with use of the strobe signal. This improves the SN ratio of the touch sensor output, thereby improving the position detection accuracy.

The conventional configuration described above, however, requires the strobe signal generation circuit and the noise cut current signal generation circuit, which are circuits exclusive for noise removal, thereby making the structure complicated.

### Disclosure of the Invention

It is an object of the present invention to provide a touch-sensor-equipped display device that is capable of avoiding influences of noises resulting from polarity inversion of a common voltage of a display device, without using a strobe signal generation circuit or a noise cut current signal generation circuit.

In order to achieve the above-described object, a touch-sensor-equipped display device disclosed herein includes: a display panel that includes an active matrix substrate having a plurality of pixel electrodes, a display medium layer, and a counter substrate having a counter electrode opposed to the plurality of pixel electrodes; a display panel driving circuit that supplies display signal voltages to the plurality of pixel electrodes, and supplies a common voltage having periodic polarity inversion to the counter electrode; a touch sensor part that is provided on a counter substrate side surface of the display panel, and that has a plurality of sensor electrodes whose electric characteristics change upon a contact by a touching object; a sensor output readout circuit that is connected to the electrodes successively, and that outputs a signal voltage corresponding to electric characteristics of the connected sensor electrode, as sensor data; a sensor control circuit that supplies a control signal to the sensor output readout circuit; and a coordinate calculation circuit that detects a position in the touch sensor part of the contact by the touching object, based on the signal voltage that is output from the sensor output readout circuit, wherein the sensor control circuit performs a scanning operation for causing full-screen sensor data used for position detection by the coordinate calculation detection circuit to be output from the sensor output readout circuit in such a manner that the scanning operation is divided into a plurality of parts so as not to coincide with the polarity inversion of the common voltage, and the coordinate calculation circuit includes: a sensor output synthesis circuit that synthesizes the sensor data obtained by the plurality of divided parts of the scanning operation so as to generate full-screen sensor data; and a coordinate position detection circuit that detects the position in the touch sensor part of the contact by the touching object, based on full-screen sensor data generated by the sensor output synthesis circuit.

The present invention enables to provide a touch-sensor-equipped display device that is capable of avoiding influences of noises resulting from polarity inversion of a common voltage of a display device, without using a special circuit such as a strobe signal generation circuit or a noise cut current signal generation circuit.

### Brief Description of Drawings

[FIG. 1] FIG. 1 is a schematic view showing a configuration of a touch-sensor-equipped display device according to one embodiment of the present invention.
[FIG. 2] FIG. 2 is a schematic view particularly showing a relationship of connection with a driving circuit and the like in the configuration of the touch-sensor-equipped display device according to Embodiment 1 of the present invention.
[FIG. 3] FIG. 3 shows an exemplary temporal variation of a common voltage (COM voltage) applied to a counter electrode of a display panel.
[FIG. 4A] FIG. 4A is a schematic view showing an exemplary configuration of transparent conductive films for contact position detection in the X direction, which are extracted from transparent conductive films in a touch sensor part.
[FIG. 4B] FIG. 4B is a schematic view showing an exemplary configuration of transparent conductive films for contact position detection in the Y direction, which are extracted from transparent conductive films in a touch sensor part.
[FIG. 4C] FIG. 4C is a schematic view showing an overall configuration of transparent conductive films in a touch sensor part.
[FIG. 5] FIG. 5 is a circuit diagram showing an internal configuration of a touch sensor circuit.
[FIG. 6] FIG. 6 is a flowchart showing exemplary operations of a circuit for touch sensor.
[FIG. 7] FIG. 7 is a timing chart showing a relationship among a common voltage, a horizontal synchronization signal, and scanning operations in a touch sensor circuit according to Embodiment 1.
[FIG. 8] FIG. 8 is a timing chart showing a relationship among a common voltage, a horizontal synchronization, signal, and scanning operations in a touch sensor circuit according to an exemplary modification of Embodiment 1.
[FIG. 9] FIG. 9 is a flowchart showing an exemplary modification of operations of a touch sensor circuit according to Embodiment 2.
[FIG. 10] FIG. 10 is a timing chart showing a relationship among a common voltage, a horizontal synchronization signal, and scanning operations in a touch sensor circuit according to Embodiment 2.
[FIG. 11] FIG. 11 is a timing chart showing a relationship among a common voltage, a horizontal synchronization signal, and scanning operations in a touch sensor circuit according to an exemplary modification of Embodiment 2.
[FIG. 12] FIG. 12 is a timing chart showing a relationship among a common voltage, a horizontal synchronization signal, and scanning operations in a touch sensor circuit in the case of the two line inversion driving.

### Embodiments for Carrying Out the Invention

A touch-sensor-equipped display device according to one embodiment of the present invention includes: a display panel that includes an active matrix substrate having a plurality of pixel electrodes, a display medium layer, and a counter substrate having a counter electrode opposed to the plurality of pixel electrodes; a display panel driving circuit that supplies display signal voltages to the plurality of pixel electrodes, and supplies a common voltage having periodic polarity inversion to the counter electrode; a touch sensor peat that is provided on a counter substrate side surface of the display panel, and that has a plurality of sensor electrodes whose electric characteristics change upon a contact by a touching object; a sensor output readout circuit that is connected to the sensor electrodes successively, and that outputs a signal voltage corresponding to electric characteristics of the connected sensor electrode, as sensor data; a sensor control circuit that supplies a control signal to the sensor output readout circuit; and a coordinate calculation circuit that detects a position in the touch sensor part of the contact by the touching object, based on the signal voltage that is output from the sensor output readout circuit, wherein the sensor control circuit performs a scanning operation for causing full-screen sensor data used for position detection by the coordinate calculation detection circuit to be output from the sensor output readout circuit in such a manner that the scanning operation is divided into a plurality of parts so as not to coincide with the polarity inversion of the common voltage, and the coordinate calculation circuit includes: a sensor output synthesis circuit that synthesizes the sensor data obtained by the plurality of divided parts of the scanning operation so as to generate full-screen sensor data; and a coordinate position detection circuit that detects the position in the touch sensor part of the contact by the touching object, based on full-screen sensor data generated by the sensor output synthesis circuit.

In the case where the scanning operation for outputting full-screen sensor data from the sensor output readout circuit is thus performed in such a manner that the scanning operation is divided into a plurality of parts so as not to coincide with the polarity inversion of the common voltage, the polarity inversion of the common voltage does not occur during the scanning operation. This enables to prevent noises resulting from the polarity inversion of the common voltage of the display device from influencing on sensor data, without using a special circuit such as a strobe signal generation circuit or a noise cut current signal generation circuit.

The touch-sensor-equipped display device according to the present embodiment may have a configuration in which the sensor control circuit performs the operation of connecting the sensor output readout circuit to all of the sensor electrodes in the touch sensor part successively in such a manner that the operation is divided into the same number of parts as the number of the plurality of parts of the scanning operation. Alternatively, the touch-sensor-equipped display device may have a configuration in which the sensor control circuit repeatedly performs, the same number of times as the number of the plurality of parts of the scanning operation, the operation of connecting the sensor output readout circuit to all of the sensor electrodes of the touch sensor part successively during one cyclic period of the common voltage, and the sensor output synthesis circuit adds sensor data obtained from the sensor output readout circuit the same number of times as the number of the plurality of parts the scanning operation, to generate the full-screen sensor data.

Further, the touch-sensor-equipped display device according the present embodiment preferably has a configuration in which the sensor electrodes include a first group of sensor electrodes a plurality of which are arrayed in a first axis direction of coordinates in the touch sensor part, and a second group of sensor electrodes a plurality of which are arrayed in a second axis direction of coordinates in the touch sensor part, and the coordinate calculation circuit determines a coordinate in the first axis direction of the position of the contact by the touching object, based on signal voltages that the sensor output readout circuit outputs when being connected to the sensor electrodes belonging to the first group of sensor electrodes, and determines a coordinate in the second axis direction of the position of the contact by the touching object, based on signal voltages that the sensor output readout circuit outputs when being connected to the sensor electrodes belonging to the second group of sensor electrodes.

It should be noted that the touch-sensor-equipped display device according to the present embodiment may have a configuration in which a polarity of the common voltage is inverted per one horizontal period, or alternatively, a configuration in which a polarity of the common voltage is inverted per two horizontal periods.

### Embodiment

Embodiments of the present invention are explained in detail below, with reference to the drawings. The same or equivalent members are denoted by the same reference numeral in the drawings, and explanations of the same are not repeated.

### Embodiment 1

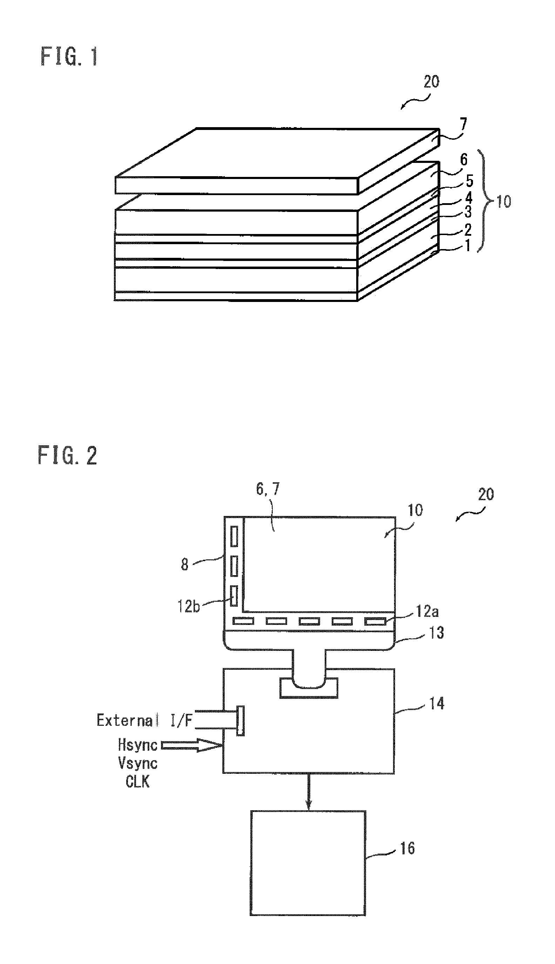

FIGS. 1 and 2 are schematic views showing a configuration of a touch-sensor-equipped display device 20 according to Embodiment 1 of the present invention.

As shown in FIGS. 1 and 2, the touch-sensor-equipped display device 20 includes an active-matrix-type (e.g., TFT-type) display panel 10, a touch sensor part 7, a driving circuit 14 that supplies various kinds of signals to the display panel 10, and a touch sensor circuit 16.

The driving circuit 14 is connected to a source driver 12a and a driver 12b via an FPC (flexible circuit board 13). The source driver 12a and the gate driver 12b may be mounted as chips on an active matrix substrate 8 of the display panel 10, or may be formed monolithically on the active matrix substrate 8.

To the driving circuit 14, video signals, a horizontal synchronization signal H_{SYNC}, a vertical synchronization signal V_{SYNC}, a clock signal CLK (pixel clock), and the like are supplied via an external interface (I/F). It should be noted that in the case where video signals are analog signals, the clock signal CLK may be generated, for example, by a PLL circuit in the driving circuit 14. To the touch sensor circuit 16, the vertical synchronization signal V_{SYNC}, the horizontal synchronization signal H_{SYNC}, and the clock signal CLK as required, are supplied via the driving circuit 14, or directly from the outside.

The display panel 10 includes at least the active matrix substrate 8, a counter substrate 6, and a display medium layer 4 provided between these substrates.

The active matrix substrate 8 includes a glass substrate 2 and a TFT array layer 3 that includes switching elements such as TFTs, lines, etc. provided on the glass substrate 2. The active matrix substrate 8 includes a plurality of pixel electrodes arranged in matrix. The display medium layer 4 is a liquid crystal layer, for example. The counter substrate 6 includes color filters (not shown) and a counter electrode 5 formed over an entire surface of the substrate. It should be noted that in the case where the display panel 10 is a display panel that uses liquid crystal for the display medium layer 4 and controls display by using polarization, a polarization plate is provided on at least one of the surfaces of the display panel 10. In the exemplary configuration shown in FIG. 1, a first polarization plate 1 (polarizer) is provided on a back face side (a side opposite to the observer's side) of the active matrix substrate 8. It should be noted that depending on the type of polarization, a second polarization plate (not shown) as an analyzer may be provided on the counter substrate 6 side.

It should be noted that it is assumed in the above explanation that color filters and a second polarization plate are provided in the display panel 10, but the color filters and the second polarization plate may be provided on the observer's side of the touch sensor part 7. In addition to these, optical members of various kinds, such as a phase difference plate, a lens sheet, etc., are provided as required in the display panel 10.

The touch sensor part 7 is provided on a front face (the observer's side) of the display panel 10. The touch sensor part 7 includes a touch sensor substrate made of, for example, glass or transparent plastic, and transparent conductive films provided on a surface of this touch sensor substrate. The transparent conductive films are formed into a predetermined pattern by a known thin film forming technique such as sputtering, which will be explained in detail later. The material for the transparent conductive films is, for example, indium-tin oxide (ITO), indium-zinc oxide (IZO), tin oxide (NESA), zinc oxide, or the like. In order to obtain transparent conductive films with excellent heat resistance and durability, the films are preferably formed by sputtering with use of a target containing Mg. The material for the transparent conductive films and the method for forming the films, however, are not limited particularly to the examples described herein. Various materials and film forming methods are applicable.

The touch sensor part 7 may be bonded to a surface of the display panel 10 with use of an adhesive so as not to have any gap, or may be attached thereto with a gap (an air layer) interposed therebetween. Here, the transparent conductive films of the touch sensor part 7 may be provided on the display panel 10 side, or conversely, the touch sensor substrate may be provided on the display panel 10 side.

It should be noted that the touch sensor part 7 may have a configuration without the above-described touch sensor substrate. The touch sensor part 7 in this case can be realized by forming the transparent conductive films directly on an external surface on the observer's side of the display panel 10. This configuration has an advantage of a decrease in the thickness of the touch-sensor-equipped display device as a whole.

In the touch sensor part 7, a protective layer is preferably formed on a topmost surface on the observer's side, in either of the cases where the touch sensor substrate is provided and where it is not provided. As the protective films, for example, any one of the following films can be used: inorganic thin films of SiO₂, SiNOₓ, etc.; a coating film of a transparent resin; and a transparent resin film of PET, TAC, etc. The touch sensor part 7 may be further subjected to an antireflection treatment and/or an antifouling treatment as required.

In the present embodiment, an active-matrix-type (e.g., TFT-type) liquid crystal display panel is used as the display panel 10. In the display panel 10, the polarity of the common voltage supplied to the counter electrode 5 of the counter substrate 6 is inversed at predetermined cycles (e.g., at each horizontal synchronization period). This is intended to prevent application of DC voltage to the liquid crystal layer as the display medium layer 4, and to reduce the voltage resistance required for a gate driver or a source driver.

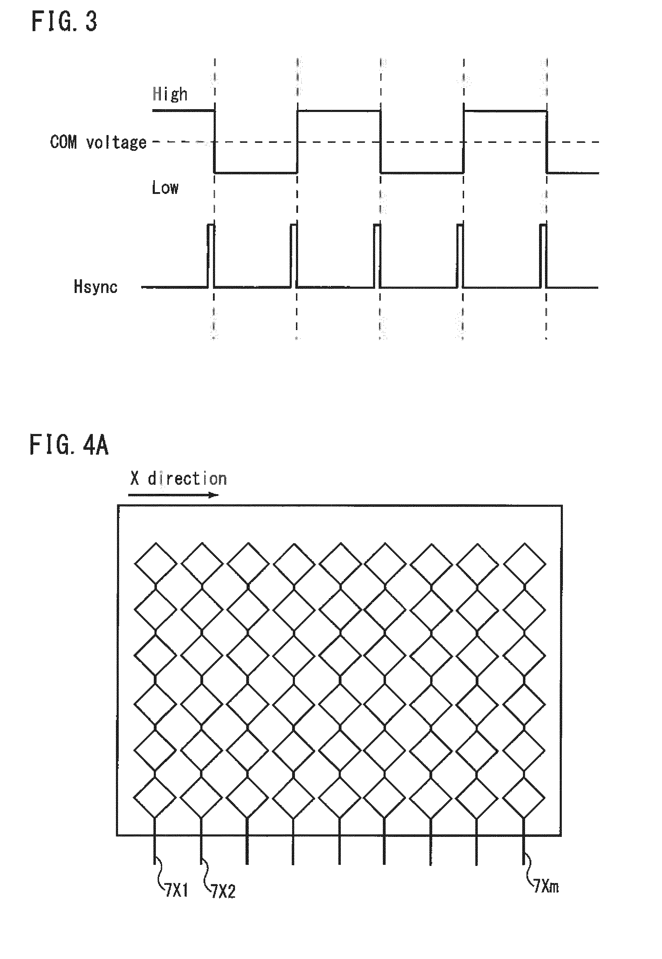

FIG. 3 shows an exemplary temporal variation of the common voltage (COM voltage) applied to the counter electrode 5 of the display panel 10. The example shown in FIG. 3 is a so-called line inversion driving, in which the polarity (positive and negative) of the common voltage is inverted at each horizontal synchronization period. The present invention, however, is not limited to this, and can be applied to a so-called two-line inversion driving, in which the polarity of the common voltage is inverted at each two of the horizontal synchronization periods, and the like. It should be noted that FIG. 3 shows a common voltage waveform in the case where the absolute value of the common voltage having the positive polarity and the absolute value thereof having the negative polarity are equal to each other. In the case of a TFT-type liquid crystal panel, however, the absolute value of the common voltage having the positive polarity is not necessarily equal to the absolute value of the common voltage having the negative polarity.

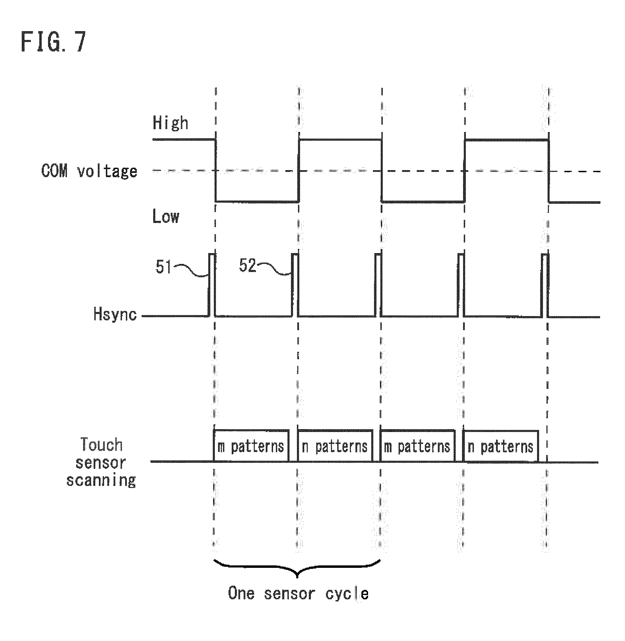

As shown in FIG. 3, the polarity of the common voltage is inverted from the positive polarity to the negative polarity, or from the negative polarity to the positive polarity, in synchronization with the falling of the horizontal synchronization signal (H_{SYNC}) (switching from the high level to the low level). In the present embodiment, as shown in FIG. 7, the scanning operation of the electrode patterns in the touch sensor part 7 is started in synchronization with the falling of the horizontal synchronization signal. This scanning operation will be explained in detail later.

It should be noted that thus when the polarity of the common voltage supplied to the counter electrode 5 is switched from the positive polarity to the negative polarity or from the negative polarity to the positive polarity; an induction voltage is generated in the touch sensor part 7, and becomes a noise component in the touch sensor output.

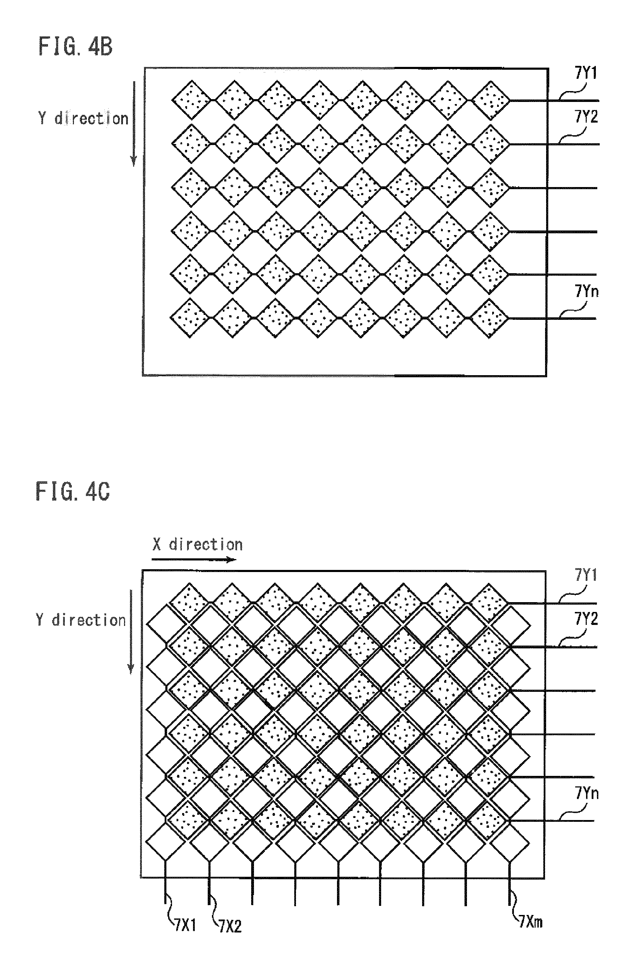

Next, the configuration of the touch sensor part 7 and the driving operation thereof according to the touch sensor part 7 are explained in more detail. In the following explanation, the long edge direction of the touch sensor part 7 is assumed to be the X direction, and the direction perpendicular to the same is assumed to be the Y direction. FIG. 4A is a schematic view showing an exemplary configuration of transparent conductive films for contact position detection in the X direction, which are extracted from transparent conductive films in the touch sensor part 7. FIG. 4B is a schematic view showing an exemplary configuration of transparent conductive films for contact position detection in the Y direction, which are extracted from transparent conductive films in the touch sensor part 7. FIG. 4C is a schematic view showing an overall configuration of transparent conductive films in the touch sensor part 7. It should be noted that in FIGS. 4B and 4C, the transparent conductive films for detecting a contact position in the Y direction are illustrated with dots for conveniences sake, so as to be easily distinguished from the transparent conductive films in the X direction. In other words, actual transparent electrode films do not have such a pattern of dots.

As shown in FIGS. 4A and 4B, the touch sensor part 7 includes m electrode patterns 7X1, 7X2,... 7Xm in the X direction, and n electrode patterns 7Y1, 7Y2,... 7Yn in the Y direction. It should be noted that illustrations in FIG. 4A and the like are simplified so as to make the explanation easily understood, but the number (m, n) of electrode patterns actually provided in the touch sensor part 7 are determined depending on the sensor resolution required for the touch sensor part 7. The touch sensor part 7 of the present embodiment determines an X coordinate of a contact position by using the electrode patterns 7X1, 7X2,... 7Xm, and determines a Y coordinate of the contact position by using the electrode patterns 7Y1, 7Y2,... 7Yn. Therefore, these electrode patterns are preferably arranged at such a density that upon a touch by a touching object like a finger or a pen, the touching object touches at least one of the electrode patterns 7X1, 7X2,... 7Xm in the X direction and at least one of the electrode patterns 7Y1, 7Y2,... 7Yn in the Y direction at the same time.

As shown in FIGS. 4A and 4B, each of the electrode patterns 7X1, 7X2,... 7Xm and the electrode patterns 7Y1, 7Y2,... 7Yn is formed in a pattern in which a plurality of conductive films patterned in a rectangular shape are connected in series via conductive lines in such a manner that vertexes of adjacent rectangles are opposed to each other. It should be noted that the conductive lines may be formed with the same material as that for the conductive films, or may be formed with another conductive material. As shown in FIG. 4C, the conductive lines are led to outside the touch sensor part 7, and are connected to a sensor output readout circuit that will be explained later.

In the example shown in FIG. 4C, the rectangles in the electrode patterns 7X1, 7X2,... 7Xm in the X direction, and the rectangles in the electrode patterns 7Y1, 7Y2,... 7Yn in the Y direction are arranged so as not to overlap. It should be noted that at intersections between the conductive lines of the electrode patterns 7X1, 7X2,... 7Xm and the conductive lines of the electrode patterns 7Y1, 7Y2,... 7Yn, insulative films are interposed between the conductive lines in the X direction and the conductive lines in the Y direction so that these lines are not electrically connected.

The configuration of the conductive films in the touch sensor part 7, however, is not limited to the example shown in FIG. 4C. For example, the configuration may be such that the electrode patterns in the X direction and the electrode patterns in the Y direction overlap. In this case, the electrode patterns in the X direction and the electrode patterns in the Y direction may be formed in different layers with an insulative film layer being interposed therebetween. Alternatively, between the electrode patterns in the X direction and the electrode patterns in the Y direction, insulative films may be interposed therebetween, at least in portions where they overlap.

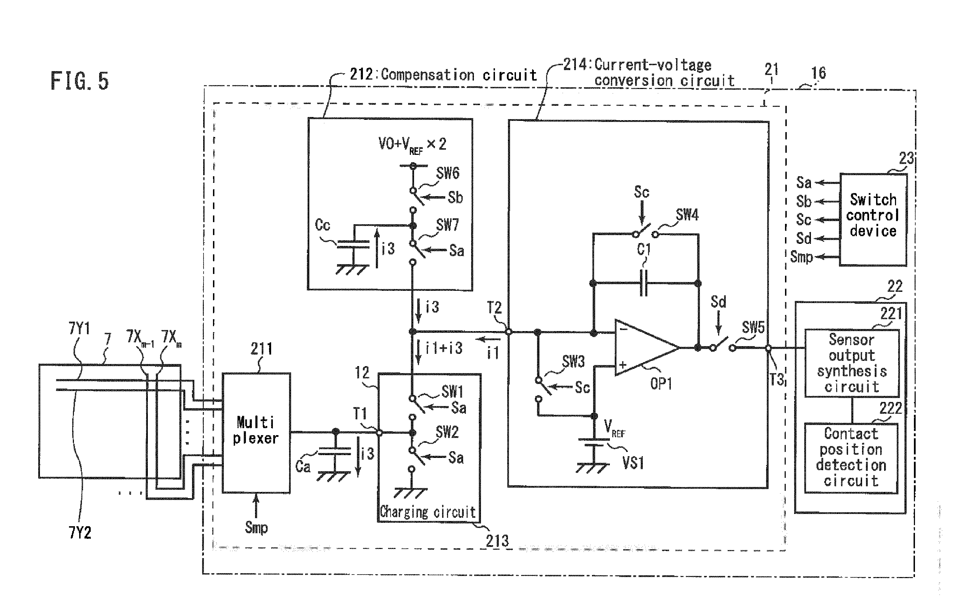

Next, the configuration of the touch sensor circuit 16 is explained. FIG. 5 is a circuit diagram showing an internal configuration of the touch sensor circuit 16. As shown in FIG. 5, the touch sensor circuit 16 includes a sensor output readout circuit 21, a coordinate calculation device 22, and a switch control device 23 (sensor control circuit).

The sensor output readout circuit 21 outputs signals representing capacitances of the electrode patterns 7X1, 7X2,... 7Xm and the electrode patterns 7Y1, 7Y2,... 7Yn of the touch sensor part 7. The coordinate calculation device 22 determines coordinates of a position at which a touching object is in contact with the electrode patterns 7X1, 7X2,... 7Xm and the electrode patterns 7Y1, 7Y2,... 7Yn, based on output signal values fed from the sensor output readout circuit 21. The switch control device 23 supplies control signals to the switches of various kinds of the sensor output readout circuit 21, etc., thereby controlling operations of the sensor output readout circuit 21.

The sensor output readout circuit 21 includes a multiplexer 211, a compensation circuit 212, a charging circuit 213, and a current-voltage conversion circuit 214.

The multiplexer 211 selectively connects outputs of the electrode patterns 7X1, 7X2,... 7Xm and the electrode patterns 7Y1, 7Y2,... 7Yn of the touch sensor part 7 to the charging circuit 213 one by one successively. The selection of the electrode pattern by the multiplexer 211 is controlled according to a selection signal Smp supplied from the switch control device 23. In the present embodiment, the multiplexer 211 selects the electrode patterns 7X1, 7X2,... 7Xm during preceding one among two successive horizontal synchronization periods, and selects the electrode patterns 7Y1, 7Y2,... 7Yn during the subsequent one among the aforementioned two horizontal synchronization periods, which will be explained in detail later.

The charging circuit 213 includes switching elements SW1 and SW2. The switching element SW1 switches connection/disconnection between a terminal T1 of the charging circuit 213 and the current-voltage conversion circuit 214. The switching element SW2 switches connection/disconnection between the terminal T1 and a ground voltage. The switching operations of the switching elements SW1 and SW2 are controlled according to control signals Sa and Sb supplied from the switch control device 23.

The compensation circuit 212 includes a capacitor Cc and switching elements SW6 and SW7. The switching element SW6 switches connection/disconnection between one terminal of the capacitor Cc and a power source terminal to which a voltage (V₀+V_{REF}×2) is applied. The switching element SW7 switches connection/disconnection between one terminal of the capacitor Cc and the switching element SW1 of the charging circuit 213. The other terminal of the capacitor Cc is maintained at a ground potential. The capacitance of the capacitor Cc is set to be equal to a capacitance of a parasitic capacitor Ca formed between the electrode patterns of the touch sensor part 7 and the terminal T1 of the charging circuit 213. In order to compensate a current i3 flowing through the parasitic capacitor Ca, the compensation circuit 212 supplies an equal current i3 to the touch sensor part 7 via the switching element SW1.

The current-voltage conversion circuit 214 includes a capacitor C1, a differential amplifier OP1, and switching elements SW3, SW4, and SW5. The capacitor C1 functions as a charge accumulation section for accumulating charges. One terminal of the capacitor C1 is connected to one of two input terminals of the differential amplifier OP1. The other one of the input terminals of the differential amplifier OP1 is connected to a power source terminal VS1 to which a voltage V_{REF} is applied. The other terminal of the capacitor C1 is connected to an output terminal of the differential amplifier OP1.

The switching element SW3 switches connection/disconnection between a terminal of the capacitor C1 that is connected to the input terminal of the differential amplifier OP1 and the power source terminal VS1 to which the voltage V_{REF} is applied. The switching element SW4 switches connection/disconnection between the terminals of the capacitor C1. The switching operations of the switching elements SW3 and SW4 are controlled according to a control signal Sc supplied from the switch control device 23.

The switching element SW5 switches connection/disconnection between an output terminal of the differential amplifier OP1 and the coordinate calculation device 22. The switching operations of the switching element SW5 are controlled according to a control signal Sd supplied from the switch control device 23.

The coordinate calculation device 22 includes a sensor output synthesis circuit 221 and a contact position detection circuit 222 (coordinate position detection circuit). The sensor output synthesis circuit 221 synthesizes outputs, each of which is partial, which are obtained by a plurality of scanning operations by the sensor output readout circuit 21, respectively. The sensor output synthesis circuit 221 sends the synthesized result as sensor data for one full screen (hereinafter referred to as "full-screen sensor data") to be used for detecting a coordinate position, to the contact position detection circuit 222, which will be described in detail later. It should be noted that the phrase of the "full-screen sensor data" herein refers to (m+n) capacitance values that are read out of the electrode patterns 7X1, 7X2,... 7Xm and the electrode patterns 7Y1, 7Y2,... and 7Yn of the touch sensor part 7. The contact position detection circuit 222 calculates coordinates of a position of a contact by a pen, a finger or the like, based on the sensor data generated by the sensor output synthesis circuit 221.

The following explains a coordinate position detection operation by the touch sensor circuit 16.

First, the switch control device 23 turns on the switching elements SW2, SW3, SW4, and SW6, and turns off the switching elements SW1, SW5, and SW7. In this state, the voltage of the terminal T1 is set at V₀ (ground voltage), and the potential difference between the terminals of the capacitor Cc is set at V₀+2V_{REF}. The both terminals of the capacitor C1 are set at the same voltage V_{REF}. Here, the potential difference between the terminals of the capacitor C1 becomes 0V

Next, the switch control device 23 turns on the switching elements SW1, SW5, and SW7, and turns off the switching elements SW2, SW3, SW4, and SW6. In this state, the capacitor C1and the electrode pattern selected by the multiplexer 211 among the electrode patterns of the touch sensor part 7 are connected. Here, if a touching object such as a finger or a pen is in contact with the electrode pattern, electric current flows through the touching object, and the amount of charges accumulated in the capacitor C1 changes. Here, the electric current i3 flowing through the parasitic capacitor Ca is compensated by the electric current i3 having the same magnitude, flowing from the capacitor Cc. The differential amplifier OP1 outputs a voltage signal according to the amount of charges accumulated in the capacitor C1. This causes one of signals having different voltages to be output from the terminal T3 of the current-voltage conversion circuit 214, depending on whether or not any touching object is in contact with the electrode pattern of the touch sensor part 7, and depending on a difference of a dielectric constant of the touching object, and the like.

Therefore, the coordinate calculation device 22 is capable of detecting whether or not any touching object is in contact with the electrode pattern of the touch sensor part 7, according to an output signal from the terminal T3 of the current-voltage conversion circuit 214. For example, whether or not there is any contact can be detected by the following manner: a value of an output signal from the terminal T3 of the current-voltage conversion circuit 214 in the case where nothing is in contact with the electrode pattern of the touch sensor part 7 is preliminarily measured and stored, and the stored value and a value of an output signal are compared.

The coordinate calculation device 22 includes a memory (not shown) that stores a value of an output signal from the terminal T3 of the current-voltage conversion circuit 214. As described above, the multiplexer 211 successively selects the electrode patterns 7X1, 7X2, ... 7Xm in the X direction and the electrode patterns 7Y1, 7Y2, ... 7Yn in the Y direction, which are (m+n) in total, over two horizontal synchronization periods. In other words, here, the scanning of all the electrode patterns is completed during two horizontal synchronization periods. In other words, one sensor cycle corresponds to two horizontal synchronization periods. Thus, in one sensor cycle, (m+n) signal values are obtained as output signals from the terminal T3 of the current-voltage conversion circuit 214. The coordinate calculation device 22 detects a position of a contact by a touching object, based on these (m+n) signal values. For example, in the case where it is determined that a contact is detected at the electrode pattern 7X1 among the electrode patterns 7X1, 7X2, ... 7Xm in the X direction, and it is also determined that a contact is detected at the electrode pattern 7Y1 in the Y direction, it can be determined that a finger, a pen, or the like is in contact in the vicinity of the intersection between the electrode pattern 7X1 in the X direction and the electrode pattern 7Y1 in the Y direction. It should be noted that the number of contact points detected during one sensor cycle is not limited to one.

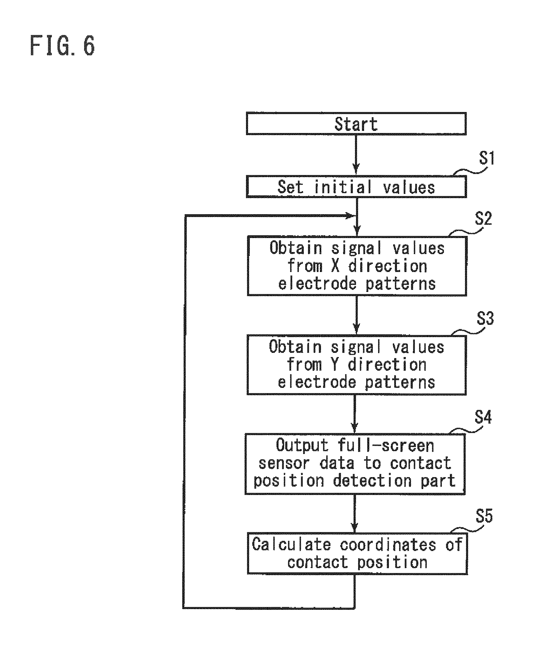

Next, the following description explains operations for driving the display panel 10 and driving the touch sensor part 7 in the touch-sensor-equipped display device 20 according to the present embodiment. FIG. 6 is a flowchart showing an exemplary operation of the touch sensor circuit 16.

As shown in FIG. 6, the power source is turned on, which causes the operation of the touch sensor circuit 16 to start. First, various kinds of initial values are set (Step S1).

Next, in the sensor output readout circuit 21, the multiplexer 211 successively selects the electrode patterns 7X1, 7X2, ... 7Xm in the X direction, according to the control signal Smp from the switch control device 23. This causes these electrode patterns to be successively connected to the charging circuit 213, thereby allowing m output signal values that correspond to capacitances of the electrode patterns, respectively, to be obtained (Step S2). The m output signal values obtained at Step S2 are stored in a memory (not shown) in or outside the coordinate calculation device 22. It should be noted that the switch control device 23 causes the multiplexer 211 to start the selection of the electrode pattern 7X1 in synchronization with the falling (switching from the high level to the low level) of one pulse 51 of the horizontal synchronization signal H_{SYNC}, as shown in FIG. 7. It should be noted that the readout of the capacitances from the electrode patterns 7X1, 7X2, ... 7Xm is completed during one horizontal synchronization period, as shown in FIG. 7.

Next, the multiplexer 211 starts the successive selection of the electrode patterns 7Y1, 7Y2, ... 7Yn in the Y direction, in synchronization with the falling of the pulse 52 next to the pulse 51 in the horizontal synchronization signal H_{SYNC}, according to the control signal Smp from the switch control device 23. This causes these electrode patterns to be successively connected to the charging circuit 213, thereby allowing n output signal values that correspond to capacitances of the electrode patterns, respectively; to be obtained (Step S3). The n output signal values obtained at Step S3 are stored in a memory (not shown) in or outside the coordinate calculation device 22. The readout of the capacitances from the electrode patterns 7Y1, 7Y2, ... 7Yn is also completed during one horizontal synchronization period, as shown in FIG. 7.

Through the processing operations at Steps S2 and S3 described above, the m output signal values obtained by the scanning operation at Step S2 and the n output signal values obtained by the scanning operation at Step S3 are stored in the aforementioned memory.

Next, in the coordinate calculation device 22, the sensor output synthesis circuit 221 successively reads out the m output signal values obtained by the scanning operation at Step S2 and the n output signal values obtained by the scanning operation at Step S3 from the memory, and feeds the same as the full-screen sensor data to the contact position detection circuit 222 (Step S4).

Next, in the coordinate calculation device 22, the contact position detection circuit 222 compares the signal values fed from the sensor output synthesis circuit 221 at Step S6 with a predetermined threshold value, to determine coordinates of the position of the contact by the touching object (Step S5). Here, the predetermined threshold value is, for example, the output signal value of the sensor output readout circuit 21 when nothing is in contact with the electrode patterns, with a margin being added thereto as required.

After that, the processing operations at Steps S2 to S5 are repeated.

Through the above-described processing operations, the touch sensor circuit. 16 uses two periods (two horizontal synchronization periods) of the horizontal synchronization signal H_{SYNC} as one sensor cycle, and obtains output signal values from the electrode patterns 7X1, 7X2, ... 7Xm during a preceding horizontal synchronization period among the aforementioned two horizontal synchronization periods, as shown in FIG. 7. Further, the touch sensor circuit 16 obtains output signal values from the electrode patterns 7Y1, 7Y2, ... 7Yn during a subsequent horizontal synchronization period among the aforementioned two horizontal synchronization periods. In other words, when the polarity of the common voltage (COM voltage) switches at a timing between the two horizontal synchronization periods, the capacitance readout from the electrode patterns is not carried out. Therefore, according to the present embodiment, a sensor output having a high S/N ratio, which does not contain noises resulting from polarity inversion of the common voltage, can be obtained.

In the above explanation, it is assumed that output signal values from the electrode patterns 7X1, 7X2, ... 7Xm are obtained during a preceding horizontal synchronization period among two horizontal synchronization periods that compose one sensor cycle, and output signal values from the electrode patterns 7Y1, 7Y2, ... 7Yn are obtained during a subsequent horizontal synchronization period. Conversely, however, output signal values from the electrode patterns 7Y1, 7Y2, ... 7Yn may be obtained during a preceding horizontal synchronization period among two horizontal synchronization periods, and output signal values from the electrode patterns 7X1, 7X2, ... 7Xm may be obtained during a subsequent horizontal synchronization period.

Further, in the above explanation, it is assumed that output signal values from the electrode patterns in the X direction (m patterns) are obtained during a preceding horizontal synchronization period among two horizontal synchronization periods that compose one sensor cycle, and output signal values from the electrode patterns in the Y direction (n patterns) are obtained during a subsequent horizontal synchronization period. The respective numbers of the electrode patterns from which output signal values are read out during the two horizontal synchronization periods are not limited to these exemplary numbers, and any numbers are applicable as long as the total number of the electrode patterns subjected to the readout operations during the two horizontal synchronization periods is (m+n).

In the foregoing explanation, it is assumed that output signal values are obtained from a total of (m+n) electrode patterns during two horizontal synchronization periods. However, the output signal values may be obtained from the electrode patterns during three or more horizontal synchronization periods, with these electrode patterns being assigned to the three or more horizontal synchronization periods.

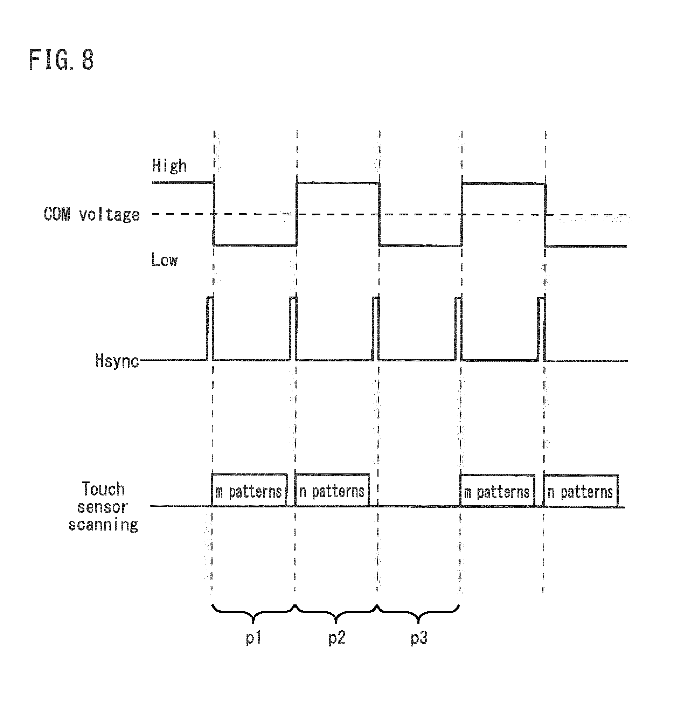

Further, in the example shown in FIG. 7, the readout of output signal values from the electrode patterns during two horizontal synchronization periods as one sensor cycle is carried out repeatedly. In other words, in the example shown in FIG. 7, the coordinate calculation based on output signal values read out during one sensor cycle is carried out in parallel with the same sensor cycle or the next sensor cycle. As shown in FIG. 8, however, the coordinate calculation based on output signal values read out during one sensor cycle may be carried out during the next horizontal synchronization period. In the example shown in FIG. 8, two horizontal synchronization periods p1 and p2 during which the readout of output signal values from electrode patterns is carried out, and a horizontal synchronization period p3 during which the coordinate calculation is carried out, without the readout from the electrode patterns being performed, appear alternately.

### Embodiment 2

A touch-sensor-equipped display device according to Embodiment 2 of the present invention is explained below, with reference to the drawings. It should be noted that members having the same functions as those in Embodiment 1 are denoted by the same numeral, and detailed explanations of the same are omitted.

The configuration of the touch-sensor-equipped display device according to Embodiment 2 is identical to that of the touch-sensor-equipped display device 20 according to Embodiment 1. In the touch-sensor-equipped display device according to Embodiment 2, however, operations of the touch sensor circuit 16 are different from those in Embodiment 1.

As described above, in Embodiment 1, signal values are read out from m electrode patterns during the first horizontal synchronization period among the two horizontal synchronization periods composing one sensor cycle, and from n electrode patterns during the second horizontal synchronization period. In contrast, in Embodiment 2, signal values are read out from (m+n) electrode patterns during one horizontal synchronization period, and signal values of two horizontal periods are added so that full-screen sensor data are obtained. More specifically, if it is assumed that the length of the horizontal synchronization period of Embodiment 1 and that of Embodiment 2 are equal to each other, the multiplexer 211 has a higher operation frequency and a capacitance readout by one scanning operation is smaller in Embodiment 2, as compared with Embodiment 1. In the case where thus the capacitance read out by one scanning operation is small, the dynamic range of a sensor output is narrow. Therefore, by adding the capacitances obtained by two scanning operations, a sensor output with a wide dynamic range is obtained.

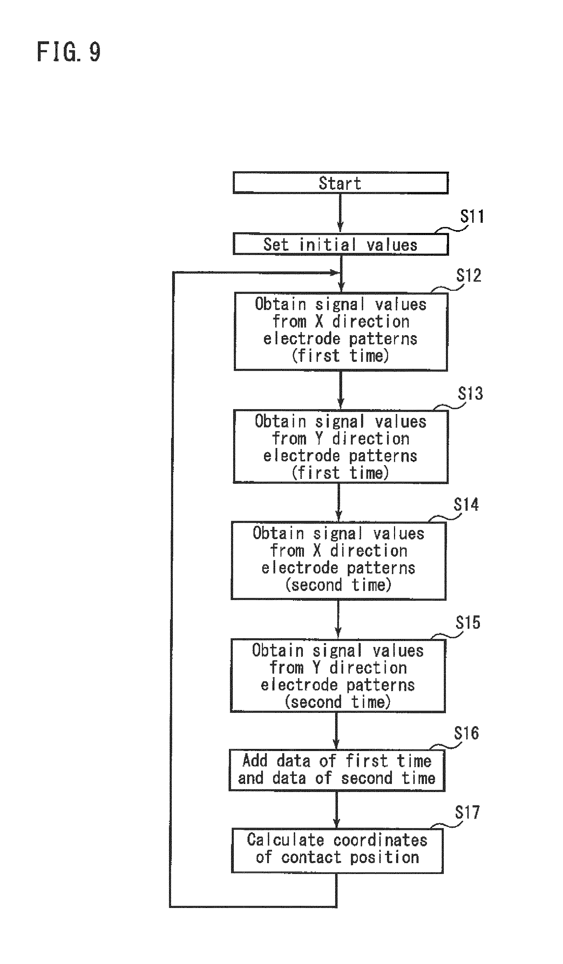

FIG. 9 is a flowchart showing an operation of the touch sensor circuit 16 according to the present embodiment. As shown in FIG. 9, the power source is turned on, which causes the operation of the touch sensor circuit 16 to start. First, various kinds of initial values are set (Step S11).

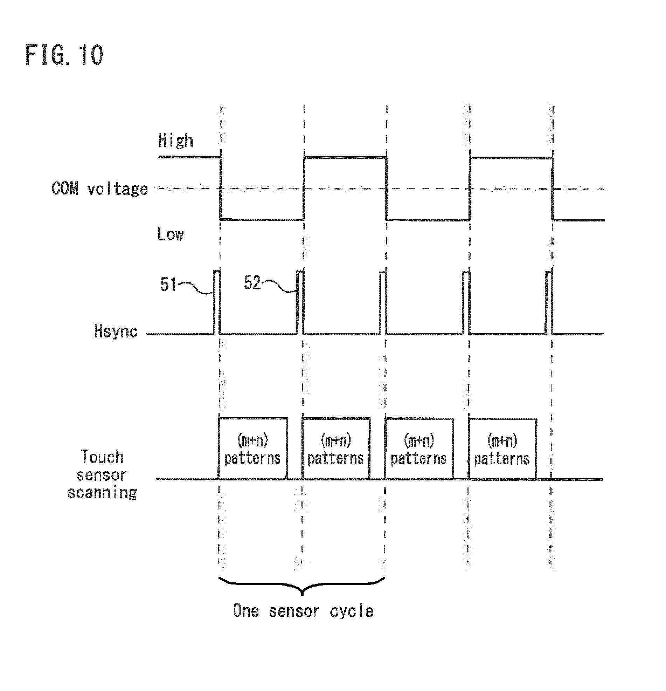

Next, the multiplexer 211 successively selects the electrode patterns 7X1, 7X2, ... 7Xm in the X direction, according to the control signal Smp from the switch control device 23. This allows m output signal values that correspond to capacitances of these electrode patterns, respectively, to be obtained (Step S12). Here, these output signal values are referred to as D1X1, D1X2, ... D1Xm, respectively. These output signal values are stored in a memory (not shown) in or outside the coordinate calculation device 22, as output signal values in the X direction that are obtained by the first scanning operation. In the present embodiment as well, the switch control device 23 causes the multiplexer 211 to start the selection of the electrode pattern, in synchronization with the falling of the pulse 51 of the horizontal synchronization signal H_{SYNC}, as shown in FIG. 10.

Following to this, the multiplexer 211 successively selects the electrode patterns 7Y1, 7Y2, ... 7Yn in the Y direction, according to the control signal Smp from the switch control device 23. This allows n output signal values that correspond to capacitances of the electrode patterns, respectively, to be obtained (Step S13). Here, these output signal values are referred to as D1Y1, D1Y2, ... D1Yn, respectively. These output signal values are stored in a memory (not shown) in or outside the coordinate calculation device 22, as output signal values in the Y direction that are obtained by the first scanning operation. It should be noted that the processing operations at Steps S12 and S13 are carried out during the same horizontal synchronization period.

Next, again, the multiplexer 211 successively selects the electrode patterns 7X1, 7X2, ... 7Xm in the X direction, according to the control signal Smp from the switch control device 23. This allows m output signal values that correspond to capacitances of these electrode patterns, respectively, to be obtained (Step S14). Here, these output signal values are referred to as D2X1, D2X2, ... D2Xm, respectively. These output signal values are stored in a memory (not shown) in or outside the coordinate calculation device 22, as data in the X direction that are obtained by the second scanning operation. It should be noted that in this second scanning operation, the switch control device 23 causes the multiplexer 211 to start the selection of the electrode pattern in synchronization with the falling of the pulse 52 next to the pulse 51 as a trigger for the scanning start at Step S12, as shown in FIG. 10.

Following to this, the multiplexer 211 successively selects the electrode patterns 7Y1, 7Y2, ... 7Yn in the Y direction, according to the control signal Smp from the switch control device 23. This allows n output signal values that correspond to capacitances of the electrode patterns, respectively, to be obtained (Step S15). Here, these output signal values are referred to as D2Y1, D2Y2, ... D2Yn, respectively. These output signal values are stored in a memory (not shown) in or outside the coordinate calculation device 22, as data in the Y direction that are obtained by the second scanning operation. It should be noted that the processing operations at Steps S14 and S15 are carried out during the same horizontal synchronization period.

As a result of the processing operations at Steps S12 to S15 described above, the (m+n) output signal values obtained by the first scanning operation, and the (m+n) output signal values obtained by the second scanning operations, are stored in the aforementioned memory.

Next, the sensor output synthesis circuit 221 of the coordinate calculation device 22 refers to the memory and adds the data in the X direction obtained by the first scanning operation and the data in the X direction obtained by the second scanning operation. Further, the sensor output synthesis circuit 221 adds the data in the Y direction obtained by the first scanning operation and the data in the Y direction obtained by the second scanning operation (Step S16).

More specifically, at Step S16, the sensor output synthesis circuit 221 outputs a value obtained by adding D1Xi and D2Xi, as an output signal value of the electrode pattern 7Xi, where "i" represents an integer from 1 to m. Further, the sensor output synthesis circuit 221 outputs a value obtained by adding D1Yj and D2Yj, as an output signal value of the electrode pattern 7Yj, where "j" represents an integer from 1 to n. In this way, as to each electrode pattern, a signal value equivalent to a sum of a capacitance upon the first scanning operation and a capacitance upon the second scanning operation can be obtained.

By doing so, if it is assumed that an output signal value corresponding to a capacitance upon one scanning operation is equivalent to data of 8 bits, an output signal value having a wide dynamic range equivalent to 16 bits can be obtained by adding the capacitance upon the first scanning operation and the capacitance upon the second scanning operation in the sensor output synthesis circuit 221.

Next, the contact position detection circuit 222 of the coordinate calculation device 22 compares the output signal value determined at Step S16 with a predetermined threshold value, thereby determining coordinates of a position of the content by the touching object (Step S17). Here, the predetermined threshold value is, for example, the output signal value of the sensor output readout circuit 21 when nothing is in contact with the electrode patterns, with a margin being added thereto as required.

After that, the processing operations at Steps S 12 to S17 are repeated.

As described above, in the present embodiment as well, when the polarity of the common voltage (COM voltage) switches, the capacitance readout from the electrode patterns is not carried out. Therefore, according to the present embodiment as well, a sensor output having a high S/N ratio, which does not contain noises resulting from polarity inversion of the common voltage, can be obtained.

The foregoing explanation refers to a case where the sensor output synthesis circuit 221 adds output signal values of two horizontal synchronization periods, to generate full-screen sensor data. Alternatively however, output signal values from the electrode patterns may be obtained by adding output signal values of three or more horizontal synchronization periods.

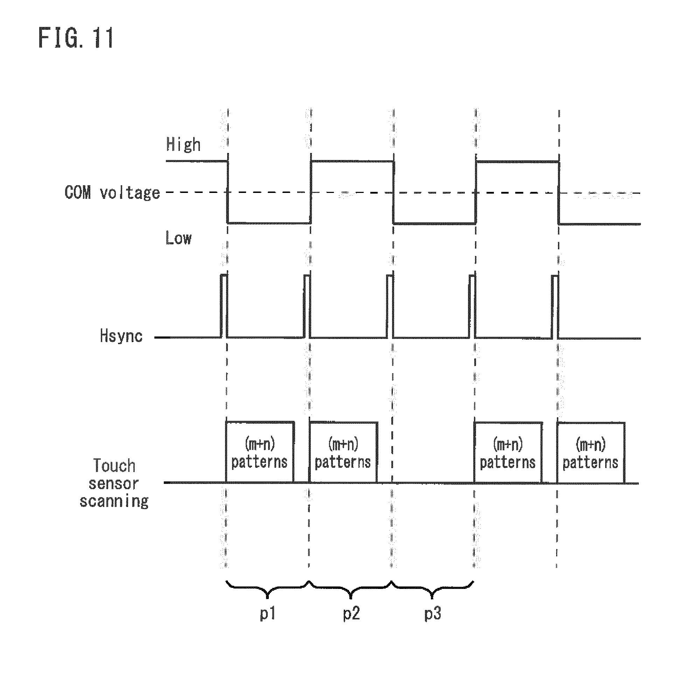

Further, in the example shown in FIG. 10, the readout of output signal values from the electrode patterns during two horizontal synchronization periods as one sensor cycle is carried out repeatedly. In other words, in the example shown in FIG. 10, the coordinate calculation based on output signal values read out during one sensor cycle is carried out in parallel with the same sensor cycle or the next sensor cycle. As shown in FIG. 11, however, the coordinate calculation based on output signal values read out during one sensor cycle may be carried out during the next horizontal synchronization period. More specifically; in the example shown in FIG. 11, two horizontal synchronization periods p1 and p2 during which the readout of output signal values from (m+n) electrode patterns is carried out, and a horizontal synchronization period p3 during which the coordinate calculation is carried out, without the readout from the electrode patterns being performed, appear alternately.

So far Embodiments of the present invention have been explained, but the above-described embodiments are merely examples for embodying the present invention. Thus, the present invention is not limited to the above-described embodiments, and may be embodied by appropriately modifying the above-described various types of embodiments, within the scope of the spirit of the present invention.

For example, the above explanation shows a configuration in which a contact position is detected by utilizing a change in a capacitance of an electrode pattern in response to a contact by a finger, a pen or the like. The configuration of the touch sensor part, however, is not limited to such an electrostatic capacitance coupling type, but any arbitrary method is applicable. Moreover, the present invention is applicable, not exclusively to a touch-type sensor, but also to a sensor that electrically or optically detects approach of a finger, a pen, or the like.

The foregoing explanation shows an exemplary configuration in which the electrode patterns 7X1, 7X2, ... 7Xm and the electrode patterns 7Y1, 7Y2, ... 7Yn are successively selected during one sensor cycle with use of one multiplexer. In other words, the foregoing explanation shows an exemplary configuration in which one sensor output readout circuit 21 is provided in the touch sensor circuit 16. Alternatively, however, the configuration may be such that one sensor output readout circuit 21 is provided for the electrode patterns 7X1, 7X2, ... 7Xm, and another sensor output readout circuit 21 is provided for the electrode patterns 7Y1, 7Y2, ... 7Yn. With this configuration, it is possible to scan the electrode patterns 7X1, 7X2, ... 7Xm and the electrode patterns 7Y1, 7Y2, ... 7Yn at the same time in parallel. In the case of this configuration as well, two or more horizontal synchronization periods compose one sensor cycle, and as is the case with Embodiment 1 or 2, the capacitance readout from the electrode patterns is not carried out at the timing when the polarity of the common voltage is switched, whereby a sensor output that does not contain noises resulting from the polarity inversion of the common voltage can be obtained.

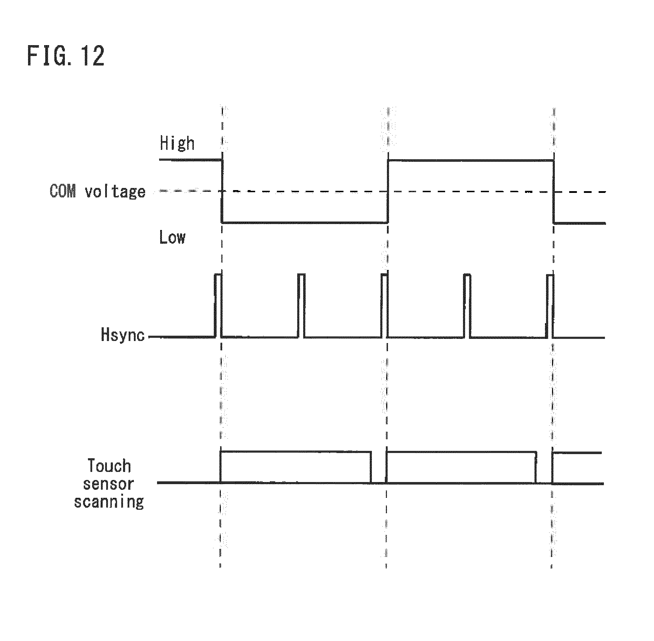

As the above-described embodiments, the case where the polarity of the common voltage is switched per one horizontal synchronization period is shown, but the present invention can be embodied with a configuration of so-called two line inversion driving, in which the polarity of the common voltage is switched per two horizontal synchronization periods, as shown in FIG. 12. In this case as well, the capacitance readout from the electrode patterns is not carried out at the timing when the polarity of the common voltage is switched, whereby a sensor output that does not contain noises resulting from the polarity inversion of the common voltage can be obtained.

### Industrial Applicability

The present invention is industrially applicable as a touch-sensor-equipped display device.

## Claims

1. A touch-sensor-equipped display device comprising:
a display panel that includes an active matrix substrate having a plurality of pixel electrodes, a display medium layer, and a counter substrate having a counter electrode opposed to the plurality of pixel electrodes;
a display panel driving circuit that supplies display signal voltages to the plurality of pixel electrodes, and supplies a common voltage having periodic polarity inversion to the counter electrode;
a touch sensor part that is provided on a counter substrate side surface of the display panel, and that has a plurality of sensor electrodes whose electric characteristics change upon a contact by a touching object;
a sensor output readout circuit that is connected to the sensor electrodes successively, and that outputs a signal voltage corresponding to electric characteristics of the connected sensor electrode, as sensor data;
a sensor control circuit that supplies a control signal to the sensor output readout circuit; and
a coordinate calculation circuit that detects a position in the touch sensor part of the contact by the touching object, based on the signal voltage that is output from the sensor output readout circuit,
wherein the sensor control circuit performs a scanning operation for causing full-screen sensor data used for position detection by the coordinate calculation detection circuit to be output from the sensor output readout circuit in such a manner that the scanning operation is divided into a plurality of parts so as not to coincide with the polarity inversion of the common voltage, and
the coordinate calculation circuit includes:
a sensor output synthesis circuit that synthesizes the sensor data obtained by the plurality of divided parts of the scanning operation so as to generate full-screen sensor data; and
a coordinate position detection circuit that detects the position in the touch sensor part of the contact by the touching object, based on full-screen sensor data generated by the sensor output synthesis circuit.

2. The touch-sensor.equipped display device according to claim 1, wherein the sensor control circuit performs the operation of connecting the sensor output readout circuit to all of the sensor electrodes in the touch sensor part successively in such a manner that the operation is divided into the same number of parts as the number of the plurality of parts of the scanning operation.

3. The touch-sensor-equipped display device according to claim 1,
wherein the sensor control circuit repeatedly performs, the same number of times as the number of the plurality of parts of the scanning operation, the operation of connecting the sensor output readout circuit to all of the sensor electrodes of the touch sensor part successively during one cyclic period of the common voltage, and
the sensor output synthesis circuit adds sensor data obtained from the sensor output readout circuit the same number of times as the number of the plurality of parts of the scanning operation, to generate the fur-screen sensor data.

4. The touch-sensor-equipped display device according to any one of claims 1 to 3,
wherein the sensor electrodes include a first group of sensor electrodes a plurality of which are arrayed in a first axis direction of coordinates in the touch sensor part, and a second group of sensor electrodes a plurality of which are arrayed in a second axis direction of coordinates in the touch sensor part, and
the coordinate calculation circuit determines a coordinate in the first axis direction of the position of the contact by the touching object, based on signal voltages that the sensor output readout circuit outputs when being connected to the sensor electrodes belonging to the first group of sensor electrodes, and determines a coordinate in the second axis direction of the position of the contact by the touching object, based on signal voltages that the sensor output readout circuit outputs when being connected to the sensor electrodes belonging to the second group of sensor electrodes.

5. The touch-sensor-equipped display device according to any one of claims 1 to 4, wherein a polarity of the common voltage is inverted per one horizontal period.

6. The touch-sensor-equipped display device according to any one of claims 1 to 4, wherein a polarity of the common voltage is inverted per two horizontal periods.
